# EUROPÄISCHE PATENTSCHRIFT

(11) **EP 2 493 719 B1**
(45) Veröffentlichungstag und Bekanntmachung des Hinweises auf die Patenterteilung: **15.08.2018**
(21) Anmeldenummer: 10751909.2
(22) Anmeldetag: 31.08.2010
(51) Int. Cl.: B60L 11/18

(54) **VERFAHREN UND VORRICHTUNGEN ZUM EINRICHTEN EINER KOMMUNIKATION ZWISCHEN EINER ERSTEN STATION UND EINER ZWEITEN STATION**
METHOD AND DEVICES FOR ESTABLISHING COMMUNICATION BETWEEN A FIRST STATION AND A SECOND STATION
PROCÉDÉS ET DISPOSITIFS D'ÉTABLISSEMENT D'UNE COMMUNICATION ENTRE UNE PREMIÈRE STATION ET UNE DEUXIÈME STATION

(30) Priorität: 30.10.2009 DE 102009051401
(43) Veröffentlichungstag der Anmeldung: 05.09.2012
(73) Patentinhaber: Siemens Aktiengesellschaft, 80333 München (DE)
(72) Erfinder: HEUER, Jörg, 82041 Oberhaching (DE); SCHMITT, Anton, 85591 Vaterstetten (DE); WINTER, Martin, 83024 Rosenheim (DE)
(86) Internationale Anmeldenummer: PCT/EP2010/062719
(87) Internationale Veröffentlichungsnummer: WO 2011/051021

(56) Entgegenhaltungen:
- WO-A2-2009/098687
- US-A1- 2002 158 749
- US-A1- 2008 040 223

## Beschreibung

Die Erfindung betrifft Verfahren und Vorrichtungen zum Einrichten einer Kommunikation einer ersten Station und einer zweiten Station.

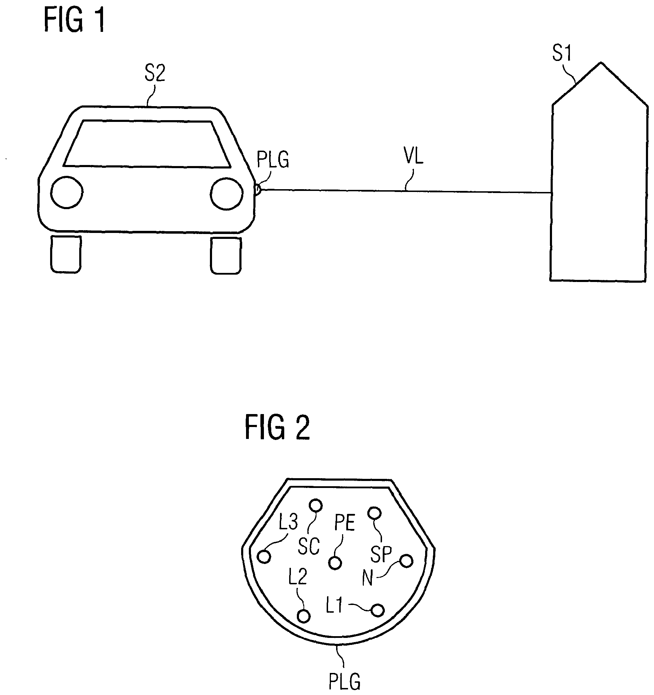

Seit geraumer Zeit wird an einer Entwicklung von Elektrofahrzeugen und deren Infrastruktur gearbeitet. Dabei ist es notwendig ein Ladekabel, d.h. eine Ladeverbindung, zwischen dem Elektrofahrzeug und einer Ladestation zum Laden einer Batterie des Elektrofahrzeugs zu standardisieren. Figur 1 zeigt exemplarisch das zu ladende Fahrzeug als Station S2, die Ladesäule als Station S1 und die Ladeverbindung. Im Rahmen dieser Standardisierung wird durch die ISO/IEC (ISO-International Standardisation Organisation, IEC-International Electrotechnical Commission) derzeit ein Dokument IEC 61851-1 Annex A erstellt.

Figur 2 zeigt exemplarisch einen Stecker PLG der Ladeverbindung VL, der in ein passendes Gegenstück am Elektrofahrzeug eingeführt wird. Die einzelnen Leiter des Steckers sind physikalisch getrennte Teilverbindungen, die bspw. jeweils als Kupferkabel mit einer isolierenden Ummantelung ausgebildet sind. Dabei bezeichnen die einzelnen Kontakte folgende Funktionen:

| | |
|---|---|
| L1, L2, L3: | drei Außenleiter |
| N: | Neutralleiter |
| PE: | Erdungsleiter, Erdpotential |
| SC: | Kontrollleiter |
| SP: | Signalleiter |

Die Kombination aus den Leitern L1, L2, L3, PE und N bilden einen Stecker der für industrielle Zwecke zum Anschluss von Drehstrom-betriebenen Maschinen eingesetzt wird und als Standard IEC 60309 definiert ist. Der Kontakt SC (Control Pilot) zeigt lediglich an, ob der Stecker PLG der Ladeverbindung VL in die Steckdose am Fahrzeug eingeführt worden ist und somit eine physikalische Verbindung zwischen der Station 1 und der Station 2 besteht. Der Signalleiter SP (Proximity) dient zum Austausch von grundlegenden Informationen. In dem Dokument IEC 61851-1 Annex A wird vorgeschlagen eine Pulsweitenmodulation (PWM) vorzusehen, mit der eine "low level" Signalisierung auf dem Signalleiter SP durchführbar ist. Zudem ist angedacht eine breitbandige Kommunikationsverbindung über eine der Außenleiter L1, L2, L3 mit Hilfe einer PLC-Technologie (PLC- Power Line Communication) durchzuführen.

Bisher wurde davon ausgegangen, dass mit Hilfe einer Signalpegelanalyse feststellbar ist, ob eine Ladeverbindung besteht, d.h. das Ladekabel am Fahrzeug angeschlossen ist. Dies funktioniert jedoch bei einer zunehmend breitbandigeren PLC-Verbindung sehr unzuverlässig und erfordert bei den für den Ladevorgang notwendigen hohen Strömen große und teure Bauteile, wie beispielsweise Drosseln.

Die Druckschrift US 2002/0158749 A1 offenbart im Zusammenhang mit Fig. 1 und 2 ein Verfahren zum Verbinden einer Leistungsbereitstellungseinrichtung 41 und einem mobilen Empfangsteil 42, welches mit einem elektrischen Fahrzeug 43 verbunden ist. Über das mobile Empfangsteil 42 wird eine ID von der Leistungsbereitstellungseinrichtung 41 angefordert, welche über eine Kommunikationsleitung 48 zwischen der Leistungsbereitstellungseinrichtung 41 und dem mobilen Empfangsteil 42 gesendet wird. Das mobile Empfangsteil 42 schickt die empfangene ID der Leistungsbereitstellungseinrichtung 41 an einen Server 45, welcher einen der ID entsprechenden Schlüsselcode an das mobile Empfangsteil 42 sendet. Mit diesem Schlüsselcode kann das mobile Empfangsteil 42 über die Kommunikationsleitung 48 die Leistungsbereitstellungseinrichtung 41 ansprechen und eine Freigabe der Leistungsdurchschaltung zum Laden des elektrischen Fahrzeugs 43 anfordern.

Die Druckschrift US 2008/0040223 A1 (D2) offenbart mit Bezug auf Fig. 2 ein Verfahren, mit welchem elektrische Energie über ein Ladekabel 208 von einer Steckdose 204 auf ein elektrisches Fahrzeug 200 geladen wird. Dieses Ladekabel 208 ist ein herkömmliches Ladekabel. Erst nach der Steckdose 204 ist eine Bridge 120 geschaltet, welche es einem Ortsmodul 210 ermöglicht, über das Ladekabel 208 nicht nur elektrische Energie zu übertragen, sondern auch eine Internetkommunikation mit dem elektrischen Fahrzeug 200 zu initiieren.

Es ist die Aufgabe der vorliegenden Erfindung Verfahren und Vorrichtungen anzugeben, mit denen eine Anbindung der zweiten Station, beispielsweise als Elektrofahrzeug ausgebildet, an eine erste Station, beispielsweise als Ladesäule ausgebildet, in zuverlässiger Art und Weise und mit Hilfe einer kostengünstigen Realisierung durchgeführt werden kann.

Diese Aufgabe wird durch die unabhängigen Ansprüche, wobei die Vorrichtung durch ein Übertragungssystem, eine erste und eine zweite Station repräsentiert wird, gelöst. Weiterbildungen der Erfindung sind den abhängigen Ansprüchen zu entnehmen.

Die Erfindung betrifft ein Verfahren zum Einrichten einer Kommunikation zwischen einer ersten Station und einer zweiten Station, wobei die erste Station zum Laden oder Entladen einer Speichereinheit der zweiten Station direkt mit der zweiten Station über eine Ladeverbindung verbunden ist, über eine erste Teilverbindung der Ladeverbindung zumindest eine Kennzeichnung übertragen wird, wobei die Kennzeichnung die erste Station und die zweite Station als Kommunikationspartner der Kommunikation identifiziert, nach Erhalt der Kennzeichnung die Kommunikation über eine Kommunikationsverbindung zum Durchführen der Kommunikation zwischen der ersten Station und der zweiten Station gestartet wird und die erste Teilverbindung unterschiedliche physikalische Verbindungen sind.

Der Kern der Erfindung ist darin zu sehen, dass die Kennzeichnung, die zum Einrichten der Kommunikation, insbesondere einer breitbandigen Kommunikation zwischen der ersten und zweiten Station benötigt wird, und die nachfolgende Kommunikationsverbindung, die auf Basis der Kennzeichnung gestartet wird, auf unterschiedliche physikalische Verbindungen aufbauen. So ist die erste Teilverbindung der Ladeverbindung direkt mit der ersten und der zweiten Station verbunden. Direkt bedeutet in diesem Zusammenhang, dass für die erste und zweite Station sicher ist, dass die Kennzeichnung nicht von einer dritten Station geschickt oder empfangen werden kann. Direkt bedeutet überdies, dass der Austausch der Kennzeichnung über eine erste Teilverbindung der Ladeverbindung erfolgt und nicht über eine von der Ladeverbindung verschiedene Verbindung.

Unter Ladeverbindung ist im Rahmen dieser Ausführung zu verstehen, dass die Ladeverbindung eine oder mehrere physikalische Verbindungen zwischen der ersten und der zweiten Station darstellt, die zum Laden der Speichereinheit, beispielsweise einer Batterie der zweiten Station vorliegt. Die Ladeverbindung kann dabei beispielsweise aus einem Ladekabel bestehen, dass die erste und zweite Station fest miteinander verbindet. Alternativ dazu kann unter der Ladeverbindung auch eine induktive Kopplung der ersten mit der zweiten Station verstanden werden, die zum Zwecke der Energieübertragung die erste mit der zweiten Station direkt verbindet.

Ferner ist unter dem Begriff physikalische Verbindung zu verstehen, dass beispielsweise bei Verwendung eines Ladekabels für die Ladeverbindung die erste Teilverbindung und die Kommunikationsverbindung auf unterschiedliche Teilverbindung des Ladekabels ausgeführt werden. Bei Verwendung einer induktiven Kopplung als Ladeverbindung findet eine physikalische Trennung der ersten Teilverbindung und der Kommunikationsverbindung, beispielsweise durch Amplituden oder Frequenzmodulation statt. Im Allgemeinen bezeichnet die physikalische Verbindung ein grundlegendes physikalisches Informationsübertragungsverfahren wie z.B. die Amplitudenmodulation eines Trägersignals, das über eine Antenne abgestrahlt und empfangen wird. Dem entsprechend beschreibt die physikalische Verbindung das eingesetzte Übertragungsmedium und die Art wie dann auf die Information aufgeprägt ist, wie beispielsweise die Modulation eines Mediums oder Trägers. Eine weitere Ausgestaltung des Merkmals unterschiedliche physikalische Verbindungen kann derart sein, dass die erste Teilverbindung drahtgebunden und die Kommunikationsverbindung drahtlos ausgeführt sind.

Unter der Ladeverbindung wird eine physikalische Verbindung, bspw. mittels eines Ladekabels, die das Laden oder Entladen einer Batterie der zweiten Station ermöglicht.

Wird die Kennzeichnung von der ersten Station an die zweite Station übertragen, so kann die erste Station als Kennzeichnung Informationen zum Einrichten einer Kommunikation für ein zu der ersten Station dazugehörigen Netzwerkes übertragen.

Alternativ dazu kann die Kennzeichnung von der zweiten Station an die erste Station übertragen werden. Dies hat unter anderem den Vorteil, dass die Kennzeichnung auch eine Identifikation der an der ersten Station anzuschließenden zweiten Station übermittelt werden kann. Diese Kennzeichnung wird beispielsweise verwendet um einen Zugriff auf die erste Station zu autorisieren.

In einer Weiterbildung der Erfindung kann die Kennzeichnung in Form einer Adresse der ersten Station und/oder der zweiten Station gebildet werden. Mit Hilfe der Adresse ist nicht nur die Kommunikation der Kommunikationspartner spezifizierbar, sondern zumindest auch einer der Kommunikationspartner selbst. Vorzugsweise werden als Adresse eine IP-Adresse, eine Service-Zertifikation, eine MAC-Adresse oder eine Netzsegmentadresse verwendet. Die IP-Adresse (IP- Internet Protocol) ist von der ITF (ITF- Internet Engeenering Task Force) standardisiert worden. Die Service Set Identifikation beschreibt eine Netzkennung zur eindeutigen Identifikation, bspw. bekannt aus WLAN IEEE 802.11 (WLAN - Wireless Local Area Network, IEEE - Institute for Electrical and Electronics Engineers) . Die MAC-Adresse (MAC- Media Access Control) spezifiziert bei internetbasierter Kommunikation eine eindeutige Identifikation der ersten und/oder zweiten Station. Die MAC-Adresse wird in OSI-Schichtenmodell (OSI- Open Systems Interconnection) in einer Schicht-2 Kommunikation, beispielsweise beim Bridging, verwendet. Schließlich bezeichnet eine Netzsegment-Adresse ein abgegrenztes Netz, indem die Kommunikation durchführbar ist, bspw. ein durch Bridges auf der Schicht-2 des OSI-Schichtenmodels abgegrenztes Netzwerk.

In einer weiteren Ausbildung der Erfindung wird die Kennzeichnung nach Herstellung der Ladeverbindung übertragen. Hierdurch wird gewährleistet, dass die Übertragung erst dann erfolgt, wenn die Ladeverbindung zwischen der ersten und zweiten Station physikalisch besteht.

Des Weiteren kann der Start der Kommunikationsverbindung von einem weiteren signalisierten Zustand abhängig gemacht werden. Bei einem derzeit in Standardisierung befindlichen Dokument IEC 61851-1 Annex A der ISO/IEC (ISO- International Organisation for Standardization, IEC- International Electrotechnical Commission) wird nach Herstellung der Ladeverbindung beispielsweise ein Betriebsmode 3, moduliert mittels Pulsweitenmodulation PWM auf dem Signalleiter übertragen, der anzeigt, dass sowohl ein Ladevorgang als auch eine Kommunikation gestartet werden soll. Somit ist der Start der Kommunikationsverbindung erst nach Empfang der Kennzeichnung und des Betriebsmodus 3 zu initiieren.

Die erste Teilverbindung der Ladeverbindung wird auf Basis eines pulsweitenmodulierten Signals, eines frequenzmodulierten Signals, eines amplitudenmodulierten Signals oder eines phase-shift-modulierten Signals hergestellt. Alle diese Modulationsverfahren weisen den Vorteil auf, dass zur Implementierung dieser Verfahren auf kommerziell verfügbare Module zurückgegriffen werden kann, so dass die Implementierung kostengünstig realisierbar ist.

In einer Weiterbildung der Erfindung wird die Kommunikationsverbindung auf Basis einer drahtlosen Verbindung oder einer drahtgebundenen Verbindung hergestellt. Bei Verwendung einer drahtgebundenen Verbindung kann die Verbindung in einfacher Art und Weise fehlersicher, d.h. mit wenig Übertragungsfehlern, und abhörsicher realisiert werden. Dagegen kann bei Verwendung einer drahtlosen Verbindung auf bekannte Funktechnologien zurückgegriffen werden, die eine einfache und kostengünstige Integration und Realisierung der drahtlosen Verbindung ermöglichen.

In einer spezifischen Ausführungsform der Kommunikationsverbindung wird diese auf Basis zumindest einer zweiten Teilverbindung der Ladeverbindung erzeugt, wobei die zumindest eine Teilverbindung zum Übertragen von Energie zum Laden der Speichereinheit ausgebildet ist. Beispielsweise wird zur Verbindung der ersten oder der zweiten Station ein Ladekabel mit mehreren phasenverschobenen Außenleitern verwendet. Es ist von Vorteil die Kommunikationsverbindung über eine dieser Außenleitern zu realisieren, da zum einen keine weiteren Verbindungen zwischen der ersten und zweiten Station hergestellt werden müssen, z.B. durch Einsatz eines weiteren Kabels, und durch Einsatz bereits bestehender Komponenten eine Realisierung kostengünstig umgesetzt werden kann. Die Kommunikationsverbindung wird unter Verwendung der Kennzeichnung gestartet, wodurch eine eindeutige Zuordnung zwischen erster und zweiter Station auch dann ermöglicht wird, falls größere Störungen, z.B. durch elektromagnetische Einstrahlung anderer Ladekabel vorliegen.

Vorzugsweise wird die Kennzeichnung verschlüsselt übertragen, wodurch die Sicherheit bei der Kommunikation zwischen der ersten und zweiten Station erhöht wird.

Vorzugsweise wird über die erste Teilverbindung eine Schlüsselinformation übertragen, die zur Erhöhung der Kommunikationssicherheit für die zu startende Kommunikation beiträgt. Diese Schlüsselinformation wird beispielsweise bei der nach dem Start der Kommunikation über die Kommunikationsverbindung andauernden Informationsaustausch verwendet, um die zu übertragenden Informationen sicher versenden zu können.

Die Erfindung betrifft auch ein Übertragungssystem zum Einrichten einer Kommunikation zwischen einer ersten Station und einer zweiten Station, wobei die erste Station zum Laden oder Entladen einer Speichereinheit der zweiten Station direkt mit der zweiten Station über eine Ladeverbindung verbunden ist, mit einer ersten Teilverbindung der Ladeverbindung zur Übertragung von zumindest einer Kennzeichnung, wobei die Kennzeichnung die erste Station und die zweite Station als Kommunikationspartner der Kommunikation identifiziert, mit einer Kommunikationsverbindung zum Durchführen der Kommunikation zwischen der ersten Station und der zweiten Station, wobei die Kommunikation nach Erhalt der Kennzeichnung ID durch die erste Station oder durch die zweite Station startbar ist, wobei die erste Teilverbindung und die Kommunikationsverbindung unterschiedliche physikalische Verbindungen sind.

Die Vorteile sind analog zu dem dem Übertragungssystem korrespondierendem Verfahren.

Ferner kann das Übertragungssystem zumindest ein erstes Mittel umfassen, das zum Ausführen von einem oder mehreren Verfahrensschritten ausgestaltet ist. Die Vorteile sind hierbei analog zu den ausgeführten Verfahrensschritten.

Die Erfindung betrifft des Weiteren eine erste Station zum Einrichten einer Kommunikation zwischen einer ersten Station und einer zweiten Station, wobei die erste Station zum Laden oder Entladen einer Speichereinheit der zweiten Station direkt mit der zweiten Station über eine Ladeverbindung verbunden ist, mit einem zweiten Mittel zum Übertragen von zumindest einer Kennzeichnung über eine erste Teilverbindung der Ladeverbindung, wobei die Kennzeichnung die erste Station und die zweite Station als Kommunikationspartner der Kommunikation identifiziert und zum Durchführen der Kommunikation zwischen der ersten Station und der zweiten Station über eine Kommunikationsverbindung, wobei die Kommunikation nach Erhalt der Kennzeichnung durch die erste Station oder durch die zweite Station startbar ist, wobei die erste Teilverbindung und die Kommunikationsverbindung unterschiedliche physikalische Verbindungen sind.

Die Vorteile der ersten Station sind analog zu dem Verfahren.

Ferner umfasst die erste Station zumindest ein drittes Mittel, das zum Ausführen von einem oder mehreren Verfahrensschritten ausgestaltet ist. Die Vorteile hierbei sind analog zu den Ausführungen gemäß den jeweiligen Verfahrensschritten.

Schließlich betrifft die Erfindung eine zweite Station zum Einrichten einer Kommunikation zwischen einer ersten Station und einer zweiten Station, wobei die erste Station zum Laden oder Entladen einer Speichereinheit der zweiten Station direkt mit der zweiten Station über eine Ladeverbindung verbunden ist mit einem vierten Mittel zum Übertragen von zumindest einer Kennzeichnung über eine erste Teilverbindung der Ladeverbindung, wobei die Kennzeichnung die erste Station und die zweite Station als Kommunikationspartner der Kommunikation identifiziert, und zum Durchführen der Kommunikation zwischen der ersten Station und der zweiten Station über eine Kommunikationsverbindung, wobei die Kommunikation nach Erhalt der Kennzeichnung durch die erste Station oder zweite Station startbar ist, wobei die erste Teilverbindung und die Kommunikationsverbindung unterschiedliche physikalische Verbindungen sind. Die Vorteile der zweiten Station sind analog zum Verfahren. Zudem kann die zweite Station zumindest ein fünftes Mittel aufweisen, das zum Ausführen von einem oder mehreren Verfahrensschritten ausgestaltet ist. Die Vorteile dieser Erweiterung sind analog zu den Verfahrensschritten.

Die Erfindung und ihre Weiterbildungen werden anhand von folgenden Figuren näher dargestellt:
- Figur 1: ein Übertragungssystem umfassend eine erste und zweite Station sowie eine Ladeverbindung;
- Figur 2: ein Stecker einer Ladeverbindung;
- Figur 3: ein Übertragungssystem, eine erste und zweite Station gemäß einem ersten Ausführungsbeispiel;
- Figur 4: ein Übertragungssystem, eine erste und zweite Station gemäß einem zweiten Ausführungsbeispiel;
- Figur 5: ein Ablaufdiagramm zur Beschreibung eines Verfahrens.

Elemente mit gleicher Funktion und Wirkungsweise sind in den Figuren mit denselben Bezugszeichen versehen.

Figur 1 zeigt eine Ladesituation, bei dem ein Elektrofahrzeug, dargestellt durch eine zweite Station S2, mittels einer Ladeverbindung VL, die als Ladekabel ausgestaltet sein kann, mit einer Ladesäule, repräsentiert durch die erste Station S1, verbunden werden soll. Dazu steckt ein Nutzer einen Stecker PLG, siehe Figur 2, der am Ende des Ladekabels angebracht ist, in eine am Elektrofahrzeug vorgesehene Einführvorrichtung, wodurch eine physikalische Verbindung zwischen dem Elektrofahrzeug und der Ladesäule hergestellt wird. Die Ladeverbindung VL des Ladekabels kann beispielsweise auf Grundlage eines Standards IEC 61851-1, Annex A ausgestaltet sein. Mittels der Ladeverbindung wird eine Batterie BAT der zweiten Station S2 geladen oder entladen. Die weiteren Ausführungen beziehen sich teilweise auf diesen Standard, wobei die Erfindung nicht auf diesen Standard begrenzt ist.

In Figur 2 ist exemplarisch ein Stecker mit mehreren Kontakten abgebildet. Die Funktion der einzelnen Kontakte wurde bereits in der Einleitung näher erläutert. Nachdem ein Nutzer den Stecker PLG in eine dazupassende Dose am Elektrofahrzeug eingesteckt hat, wird durch den Signalleiter SP ein Betriebsmode 3 angezeigt. Dieser Betriebsmode 3 bedeutet, dass das Elektrofahrzeug geladen und zusätzlich, d.h. parallel, eine Kommunikation zwischen der Ladesäule und dem Elektrofahrzeug aufgebaut werden soll. Im Rahmen dieser Signalisierung, die auch "low level" Signalisierung genannt wird, teilt die Ladesäule dem Elektrofahrzeug zumindest eine Kennzeichnung ID mit, mit der das Elektrofahrzeug und die Ladestation als Kommunikationspartner einer später zu erfolgenden Kommunikation identifizierbar sind. Im vorliegenden Fall übermittelt die Ladestation eine IP-Adresse (IP-Internet Protocol), die durch die Organisation IETF (IETF- Internet Engeenering Task Force) spezifiziert worden ist. Mit Hilfe dieser IP-Adresse erkennt das Elektrofahrzeug in welchem IP-Netzwerk es sich befindet, so dass innerhalb des IP-Netzwerkes Daten zwischen Kommunikationspartnern, also der Ladesäule und dem Elektrofahrzeug, eindeutig austauschbar sind. Nachfolgend wird die breitbandige Kommunikation über eine der Phasen L1, L2, L3 mit Hilfe der PLC-Technologie gestartet. Im Rahmen der PLC-Technologie wird dann die als Kennzeichnung übermittelte IP-Adresse zum Austausch von Daten zwischen der Ladesäule und dem Elektrofahrzeug eingesetzt.

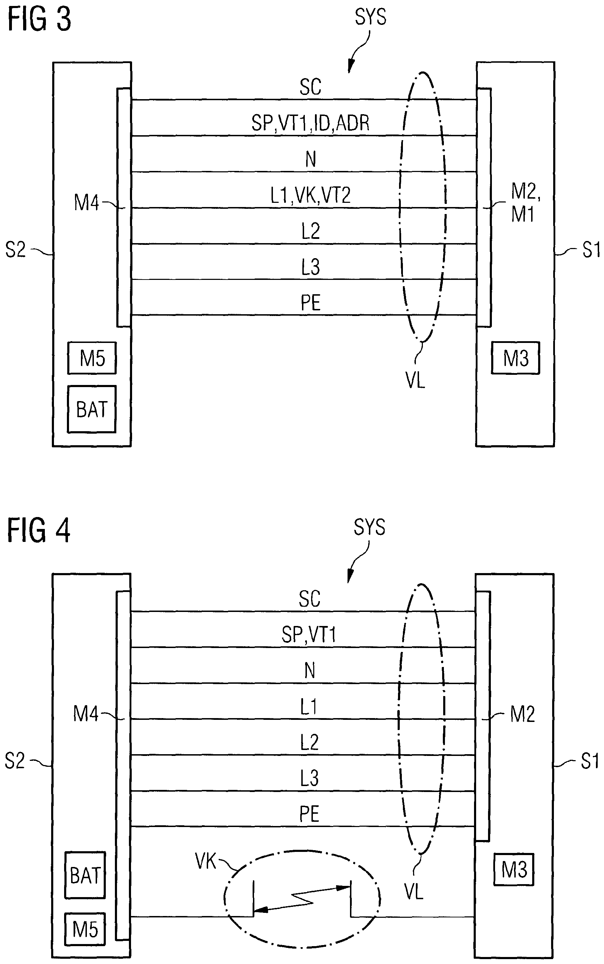

Figur 3 zeigt, dass mit Hilfe einer ersten Teilverbindung VT1, die im vorliegenden Ausführungsbeispiel durch den Signalleiter SP realisiert wird, ein Austausch der zumindest einen Kennzeichnung ID wird beispielsweise die IP-Adresse ADR, erfolgt. Zeitlich nachfolgend wird eine breitbandige Kommunikationsverbindung über eine zweite Teilverbindung VT2 gestartet, wobei diese zweite Teilverbindung VT2 die Kommunikationsverbindung VK über eine oder mehrere der Außenleiter L1, L2, L3, die zum Übertragen von Energie E zum Laden oder Entladen der Speichereinheit BAT des Elektrofahrzeugs vorgesehen sind, durchgeführt wird.

In einer Alternative hierzu wird die Kennzeichnung ID in Form einer MAC-Adresse (MAC- Media Access Control) von dem Elektrofahrzeug zu der Ladestation nach Anschließen des Ladekabels über die Signalleitung SP des Ladekabels übertragen. Im Folgenden kann eine breitbandige Kommunikation über zumindest eine der Außenleiter L1, L2, L3 mit Hilfe der MAC-Adresse erfolgen. Alternativ hierzu kann die Ladestation der empfangenen MAC-Adresse eine IP-Adresse zuordnen, die zum Einrichten und Betreiben der Kommunikation dem Elektrofahrzeug, beispielsweise über die Signalleitung SP, übermittelt wird. Daran anschließend kann die breitbandige Kommunikation mit Hilfe der PLC-Technologie über eine der Außenleiter erfolgen.

Figur 3 zeigt ferner die erste Station S1 mit einem zweiten Mittel M2, wobei durch das zweite Mittel zumindest die erste Teilverbindung und alternativ zusätzlich die zweite Teilverbindung ansteuerbar und zum Austausch der Kennzeichnung bzw. zum Start der Kommunikation verwendbar ist. Zudem kann die erste Station S1 zumindest ein drittes Mittel M3 aufweisen, mit dem alternative Ergänzungen der ersten Station implementierbar und ausführbar sind. Ferner zeigt Figur 3 ein viertes Mittel M4 der zweiten Station S2, wobei das vierte Mittel derart ausgebildet ist, dass damit zumindest die erste Teilverbindung und optional zusätzlich die zweite Teilverbindung ansteuerbar und zum Austausch der Kennzeichnung bzw. zum Start der Kommunikation verwendbar ist. Ferner kann die zweite Station S2 zumindest ein fünftes Mittel M5 aufweisen, mit dem Erweiterungen der zweiten Station implementierbar und ausführbar sind.

Figur 4 zeigt eine alternative Ausführungsform der Erfindung. Hierbei unterscheidet sich Figur 4 von Figur 3 dadurch, dass die Kommunikationsverbindung VK nicht durch eine zweite Teilverbindung VT2 der Ladeverbindung VL realisiert wird, sondern durch eine zusätzliche Verbindung, im vorliegenden Fall in Form einer drahtlosen Verbindung. Diese drahtlose Verbindung basiert beispielsweise auf einem Standard Bluetooth oder WLAN (WLAN- Wireless Local Area Network).

In einer weiteren nicht dargestellten Ausführungsform wird die Ladeverbindung VL nicht durch ein Ladekabel mit mehreren Teilverbindungen realisiert, sondern durch induktive Kopplung zwischen der ersten und der zweiten Station. Hierbei werden Leiter, die bei dem Ladekabel durch den Signalleiter SP und einen der Außenleiter L1,L2, L3 realisiert werden, beispielsweise durch ein frequenzmoduliertes Signal, übertragen. Somit bestehen auch in dieser Alternative zwischen der ersten Teilverbindung und der Kommunikationsverbindung unterschiedliche physikalische Verbindungen, da beispielsweise unterschiedliche Frequenzspektren oder andere unterschiedliche Modulationsarten eingesetzt werden, die unterschiedliche physikalische Verbindungen der ersten Teilverbindung und der Kommunikationsverbindung zulassen.

In einer alternativen Ausführungsform ist die erste Teilverbindung der Ladeverbindung zum Übertragen von Energie zum Laden oder Entladen der Speichereinheit ausgebildet.

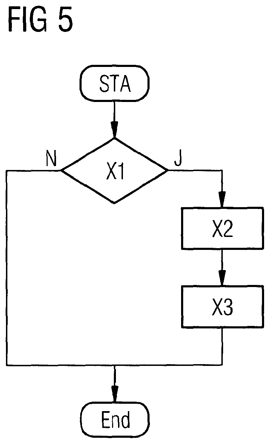

Figur 5 zeigt exemplarisch einzelne Verfahrensschritte zum Durchführen des Verfahrens zum Einrichten einer Kommunikation. Das Ablaufdiagramm wird im Zustand STA gestartet. In einem ersten Schritt X1 überprüft beispielsweise die Ladestation, ob eine physikalische Verbindung zu dem Elektrofahrzeug, beispielsweise mit Hilfe des Kontrolleiters SC, aufgebaut worden ist. Ist dies nicht der Fall, so wird das Ablaufdiagramm im Zustand END beendet. Dieser Pfad ist mit "N" gekennzeichnet. Ansonsten wird das Ablaufdiagramm im Pfad "J" fortgesetzt und als nächstes der zweite Schritt X2 ausgeführt. In diesem Schritt überträgt die Ladestation die zumindest eine Kennung ID zur Identifikation der im Rahmen der Kommunikation agierenden Kommunikationspartner, repräsentiert durch die erste Station S1 und die zweite Station S2. Nach Erhalt der Kennzeichnung ID startet die zweite Station S2 auf dem Außenleiter L1 eine breitbandige Kommunikation auf Basis des PLC-Verfahrens oder eines anderen Kommunikationsverfahrens. Dies ist im Ablaufdiagramm durch den dritten Schritt X3 dargestellt. Das Ablaufdiagramm wird im Schritt END beendet. In einer Alternative wird im Schritt X1 ferner eine Signalisierung auf dem Signalleiter überwacht. Erst nachdem ein vorgebbarer Betriesbmode, z.B. mode 3, erkannt wird, wird das Zustandsdiagramm im Pfad "J" fortgesetzt.

Die erste Station, die zweite Station und das Übertragungssystem SYS sowie die einzelnen Komponenten und Mittel dieser können in Hardware, Software oder in einer Kombination aus Software und Hardware implementiert und ausgeführt werden. Insbesondere kann die Realisierung der Erfindung und deren Komponenten und Stationen durch einen Prozessor derart ausgeführt werden, dass der Prozessor aus einem ihm angekoppelten Speicher Programmcode ausliest, mit Hilfe dessen einzelne Schritte der Erfindung ausführbar bzw. der Komponenten, wie erste und zweite Station, steuerbar sind.

## Patentansprüche

1. Verfahren zum Einrichten einer Kommunikation zwischen einer ersten Station (S1) und einer zweiten Station (S2), wobei die erste Station (S1) zum Laden oder Entladen einer Speichereinheit (BAT) der zweiten Station (S2) direkt mit der zweiten Station (S2) über eine Ladeverbindung (VL) verbunden ist,
**dadurch gekennzeichnet, dass**
über eine erste Teilverbindung (VT1) der Ladeverbindung (VL) zumindest eine Kennzeichnung (ID) übertragen wird, wobei die Kennzeichnung (ID) die erste Station (S1) und die zweite Station (S2) als Kommunikationspartner der Kommunikation identifiziert,
nach Erhalt der Kennzeichnung (ID) die Kommunikation unter Verwendung der Kennzeichnung (ID) über eine Kommunikationsverbindung (VK) zum Durchführen der Kommunikation zwischen der ersten Station (S1) und der zweiten Station (S2) gestartet wird,
die erste Teilverbindung (VT1) und die Kommunikationsverbindung (VK) unterschiedliche physikalische Verbindungen sind, und die Kennzeichnung (ID) in Form einer Adresse (ADR) der ersten Station (S1) und/oder der zweiten Station (S2) gebildet wird.

2. Verfahren nach Anspruch 1,
**dadurch gekennzeichnet, dass**
die Kennzeichnung (ID) von der ersten Station (S1) an die zweite Station (S2) übertragen wird.

3. Verfahren nach Anspruch 1,
**dadurch gekennzeichnet, dass**
die Kennzeichnung (ID) von der zweiten Station (S2) an die erste Station (S1) übertragen wird.

4. Verfahren nach Anspruch 1,
**dadurch gekennzeichnet, dass**
die Adresse (ADR) in Form einer IP-Adresse, einer Service Set Identifikation (SSID), einer MAC-Adresse oder einer Netzsegment-Adresse gebildet wird.

5. Verfahren nach einem der vorangehenden Ansprüche,
**dadurch gekennzeichnet, dass**
die Kennzeichnung (ID) nach Herstellung der Ladeverbindung (VL) übertragen wird.

6. Verfahren nach einem der vorangehenden Ansprüche,
**dadurch gekennzeichnet, dass**
die erste Teilverbindung (VT1) der Ladeverbindung (VL) auf Basis eines pulsbreitenmodulierten Signals (PWM), eines frequenzmodulierten Signals (FM), eines amplitudenmodulierten Signals (AM) oder eines Phase-Shift-Key-modulierten Signals (PSK) hergestellt wird.

7. Verfahren nach einem der vorangehenden Ansprüche,
**dadurch gekennzeichnet, dass**
die Kommunikationsverbindung (VK) auf Basis einer drahtlosen Verbindung oder einer drahtgebundenen Verbindung hergestellt wird.

8. Verfahren nach einem der Ansprüche 1 bis 6,
**dadurch gekennzeichnet, dass**
die Kommunikationsverbindung (VK) auf Basis zumindest einer zweiten Teilverbindung (VT2) der Ladeverbindung (VL) erzeugt wird, wobei die zumindest eine zweite Teilverbindung (VT2) zum Übertragen von Energie (E) zum Laden oder Entladen der Speichereinheit (BAT) ausgebildet ist.

9. Verfahren nach einem der vorangehenden Ansprüche,
**dadurch gekennzeichnet, dass**
die Kennzeichnung (ID) verschlüsselt übertragen wird.

10. Verfahren nach einem der vorangehenden Ansprüche,
**dadurch gekennzeichnet, dass**
über die erste Teilverbindung (VT1) eine Schlüsselinformation (SI) übertragen wird.

11. Übertragungssystem (SYS) zum Einrichten einer Kommunikation einer ersten Station (S1) mit einer zweiten Station (S2), wobei die erste Station (S1) zum Laden oder Entladen einer Speichereinheit (BAT) der zweiten Station (S2) direkt mit der zweiten Station (S2) über eine Ladeverbindung (VL) verbunden ist,
**gekennzeichnet durch**
eine erste Teilverbindung (VT1) der Ladeverbindung (VL) zum Übertragen von zumindest einer Kennzeichnung (ID), wobei die Kennzeichnung (ID) die erste Station (S1) und die zweite Station (S2) als Kommunikationspartner der Kommunikation identifiziert,
eine Kommunikationsverbindung (VK) zum Durchführen der Kommunikation zwischen der ersten Station (S1) und der zweiten Station (S2), wobei die Kommunikation nach Erhalt der Kennzeichnung (ID) durch die erste Station (S1) oder durch die zweite Station (S2) unter Verwendung der Kennzeichnung (ID) startbar ist,
und wobei die erste Teilverbindung (VT1) und die Kommunikationsverbindung (VK) unterschiedliche physikalische Verbindungen sind, und
die Kennzeichnung (ID) in Form einer Adresse (ADR) der ersten Station (S1) und/oder der zweiten Station (S2) gebildet wird.

12. Übertragungssystem (SYS) nach Anspruch 11,
bei dem das Übertragungssystem (SYS) zumindest ein erstes Mittel (M1) umfasst, das zum Ausführen eines Verfahrens mit den Merkmalen eines der Ansprüche 2 bis 10 ausgestaltet ist.

13. Erste Station (S1) zum Einrichten einer Kommunikation zwischen der ersten Station (S1) und einer zweiten Station (S2), wobei die erste Station (S1) zum Laden oder Entladen einer Speichereinheit (BAT) der zweiten Station (S2) direkt mit der zweiten Station (S2) über eine Ladeverbindung (VL) verbunden ist,
**gekennzeichnet durch**
ein zweites Mittel (M2) zum Übertragen von zumindest einer Kennzeichnung (ID) über eine erste Teilverbindung (VT1) der Ladeverbindung (VL), wobei die Kennzeichnung (ID) die erste Station (S1) und die zweite Station (S2) als Kommunikationspartner der Kommunikation identifiziert, und zum Durchführen der Kommunikation zwischen der ersten Station (S1) und der zweiten Station (S2) über eine Kommunikationsverbindung (VK), wobei die Kommunikation nach Erhalt der Kennzeichnung (ID) durch die erste Station (S1) oder durch die zweite Station (S2) unter Verwendung der Kennzeichnung (ID) startbar ist, und wobei die erste Teilverbindung (VT1) und die Kommunikationsverbindung (VK) unterschiedliche physikalische Verbindungen sind, und
die Kennzeichnung (ID) in Form einer Adresse (ADR) der ersten Station (S1) und/oder der zweiten Station (S2) gebildet wird.

14. Erste Station nach Anspruch 13,
bei dem die erste Station (S1) zumindest ein drittes Mittel (M3) umfasst, dass zum Ausführen eines Verfahrens mit den Merkmalen eines der Ansprüche 2 bis 11 ausgestaltet ist.

15. Zweite Station (S2) zum Einrichten einer Kommunikation zwischen einer ersten Station (S1) und der zweiten Station (S2), wobei die erste Station (S1) zum Laden oder Entladen einer Speichereinheit (BAT) der zweiten Station (S2) direkt mit der zweiten Station (S2) über eine Ladeverbindung (VL) verbunden ist,
**gekennzeichnet durch**
ein viertes Mittel (M4) zum Übertragen von zumindest einer Kennzeichnung (ID) über eine erste Teilverbindung (VT1) der Ladeverbindung (VL), wobei die Kennzeichnung (ID) die erste Station (S1) und die zweite Station (S2) als Kommunikationspartner der Kommunikation identifiziert, und zum Durchführen der Kommunikation zwischen der ersten Station (S1) und der zweiten Station (S2) über eine Kommunikationsverbindung (VK), wobei die Kommunikation nach Erhalt der Kennzeichnung (ID) durch die erste Station (S1) oder zweite Station (S2) unter Verwendung der Kennzeichnung (ID) startbar ist,
und wobei die erste Teilverbindung (VT1) und die Kommunikationsverbindung (VK) unterschiedliche physikalische Verbindungen sind, und
die Kennzeichnung (ID) in Form einer Adresse (ADR) der ersten Station (S1) und/oder der zweiten Station (S2) gebildet wird.

16. Zweite Station (S2) nach Anspruch 15,
bei dem die erste Station (S1) zumindest ein fünftes Mittel (M5) umfasst, dass zum Ausführen eines Verfahrens mit den Merkmalen eines der Ansprüche 2 bis 10 ausgestaltet ist.

## Claims

1. Method for establishing communication between a first station (S1) and a second station (S2), wherein the first station (S1) is connected directly to the second station (S2) via a charging connection (VL) for charging or discharging a memory unit (BAT) of the second station (S2),
**characterised in that**
at least one identifier (ID) is transmitted via a first partial connection (VT1) of the charging connection (VL), wherein the identifier (ID) identifies the first station (S1) and the second station (S2) as communication partners for communication,
after receiving said identifier (ID), the communication is started using the identifier (ID) via a communication connection (VK) for performing the communication between the first station (S1) and the second station (S2),
the first partial connection (VT1) and the communication connection (VK) are different physical connections and the identifier (ID) is created in the form of an address (ADR) of the first station (S1) and/or the second station (S2).

2. Method according to claim 1,
**characterised in that**
the identifier (ID) is transmitted from the first station (S1) to the second station (S2).

3. Method according to claim 1,
**characterised in that**
the identifier (ID) is transmitted from the second station (S2) to the first station (S1).

4. Method according to claim 1, **characterised in that**
the address (ADR) is created in the form of an IP address, a service set identification (SSID), a MAC address or a network segment address.

5. Method according to one of the preceding claims,
**characterised in that**
the identifier (ID) is transmitted after the establishment of the charging connection (VL).

6. Method according to one of the preceding claims,
**characterised in that**
the first partial connection (VT1) of the charging connection (VL) is established on the basis of a pulse-width modulated signal (PWM), a frequency-modulated signal (FM), an amplitude-modulated signal (AM) or a phase-shift-key modulated signal (PSK) .

7. Method according to one of the preceding claims,
**characterised in that**
the communication connection (VK) is established on the basis of a wireless connection or a wire-bound connection.

8. Method according to one of claims 1 to 6,
**characterised in that**
the communication connection (VK) is created on the basis of at least one second partial connection (VT2) of the charging connection (VL), wherein the at least one second partial connection (VT2) is embodied to transmit energy (E) for charging or discharging the memory unit (BAT).

9. Method according to one of the preceding claims,
**characterised in that**
the identifier (ID) is transmitted in encoded form.

10. Method according to one of the preceding claims,
**characterised in that** key information (SI) is transmitted via the first partial connection (VT1).

11. Transmission system (SYS) for establishing communication between a first station (S1) and a second station (S2), wherein the first station (S1) is connected directly to the second station (S2) via a charging connection (VL) to charge or discharge a memory unit (BAT) of the second station (S2),
**characterised by**
a first partial connection (VT1) of the charging connection (VL) for transmitting at least one identifier (ID), wherein the identifier (ID) identifies the first station (S1) and the second station (S2) as communication partners for communication,
a communication connection (VK) for performing the communication between the first station (S1) and the second station (S2), wherein the communication can be started after receiving the identifier (ID) by the first station (S1) or by the second station (S2) using the identifier (ID),
and wherein the first partial connection (VT1) and the communication connection (VK) are different physical connections, and
the identifier (ID) is created in the form of an address (ADR) of the first station (S1) and/or the second station (S2).

12. Transmission system (SYS) according to claim 11,
wherein the transmission system (SYS) comprises at least one first means (M1) embodied to carry out a method with the features of one of claims 2 to 10.

13. First station (S1) for establishing communication between the first station (S1) and a second station (S2), wherein the first station (S1) is connected directly to the second station (S2) via a charging connection (VL) for charging or discharging a memory unit (BAT) of the second station (S2),
**characterised by**
a second means (M2) for transmitting at least one identifier (ID) via a first partial connection (VT1) of the charging connection (VL), wherein the identifier (ID) identifies the first station (S1) and the second station (S2) as communication partners for communication, and for performing the communication between the first station (S1) and the second station (S2) via a communication connection (VK), wherein the communication can be started after receiving the identifier (ID) by the first station (S1) or by the second station (S2) using the identifier (ID),
and wherein the first partial connection (VT1) and the communication connection (VK) are different physical connections, and
the identifier (ID) is created in the form of an address (ADR) of the first station (S1) and/or the second station (S2).

14. First station according to claim 13,
wherein the first station (S1) comprises at least one third means (M3) embodied to carry out a method with the features of one of claims 2 to 11.

15. Second station (S2) for establishing communication between a first station (S1) and the second station (S2), wherein the first station (S1) is connected directly to the second station (S2) via a charging connection (VL) for charging or discharging a memory unit (BAT) of the second station (S2), **characterised by**
a fourth means (M4) for transmitting at least one identifier (ID) via a first partial connection (VT1) of the charging connection (VL), wherein the identifier (ID) identifies the first station (S1) and the second station (S2) as communication partners for communication, and for performing the communication between the first station (S1) and the second station (S2) via a communication connection (VK), wherein the communication can be started after receiving the identifier (ID) by the first station (S1) or second station (S2) using the identifier (ID),
and wherein the first partial connection (VT1) and the communication connection (VK) are different physical connections, and
the identifier (ID) is created in the form of an address (ADR) of the first station (S1) and/or the second station (S2).

16. Second station (S2) according to claim 15, wherein the first station (S1) comprises at least one fifth means (M5) embodied to carry out a method with the features of one of claims 2 to 10.

## Revendications

1. Procédé d'établissement d'une communication entre une première station (S1) et une deuxième station (S2), la première station (S1) étant connectée directement à la deuxième station (S2) via une connexion de charge (VL) pour charger ou décharger unité de mémoire (BAT) de la deuxième station (S2), **caractérisé en ce que** :
- au moins un identifiant (ID) est transmis via une première connexion partielle (VT1) de la connexion de charge (VL), l'identifiant (ID) identifiant la première station (S1) et la deuxième station (S2) en tant que partenaires de communication de la communication ;
- après la réception de l'identifiant (ID), la communication est lancée avec utilisation de l'identifiant (ID) via une connexion de communication (VK) pour effectuer la communication entre la première station (S1) et la deuxième station (S2) ;
- la première connexion partielle (VT1) et la connexion de communication (VK) sont différentes connexions physiques ; et
- l'identifiant (ID) est constitué sous la forme d'une adresse (ADR) de la première station (S1) et/ou de la deuxième station (S2).

2. Procédé selon la revendication 1, **caractérisé en ce que** l'identifiant (ID) est transmis de la première station (S1) à la deuxième station (S2).

3. Procédé selon la revendication 1, **caractérisé en ce que** l'identifiant (ID) est transmis de la deuxième station (S2) à la première station (S1).

4. Procédé selon la revendication 1, **caractérisé en ce que** l'adresse (ADR) est constituée sous la forme d'une adresse IP, d'une Service Set Identification (SSID), d'une adresse MAC ou d'une adresse de segment de réseau.

5. Procédé selon l'une des revendications précédentes, **caractérisé en ce que** l'identifiant (ID) est transmis après l'établissement de la connexion de charge (VL).

6. Procédé selon l'une des revendications précédentes, **caractérisé en ce que** la première connexion partielle (VT1) de la connexion de charge (VL) est établie sur la base d'un signal modulé en largeur d'impulsion (PWM), d'un signal modulé en fréquence (FM), d'un signal modulé en amplitude (AM) ou d'un signal modulé Phase Shift Key (PSK).

7. Procédé selon l'une des revendications précédentes, **caractérisé en ce que** la connexion de communication (VK) est établie sur la base d'une connexion sans fil ou d'une connexion filaire.

8. Procédé selon l'une des revendications 1 à 6, **caractérisé en ce que** la connexion de communication (VK) est créée sur la base d'au moins une deuxième connexion partielle (VT2) de la connexion de charge (VL), l'au moins une deuxième connexion partielle (VT2) étant réalisée pour transmettre de l'énergie (E) pour charger ou décharger l'unité de mémoire (BAT).

9. Procédé selon l'une des revendications précédentes, **caractérisé en ce que** l'identifiant (ID) est transmis de manière cryptée.

10. Procédé selon l'une des revendications précédentes, **caractérisé en ce qu'**une information clé (SI) est transmise via la première connexion partielle (VT1).

11. Système de transmission (SYS) pour établir une communication d'une première station (S1) avec une deuxième station (S2), la première station (S1) étant, pour charger ou décharger une unité de mémoire (BAT) de la deuxième station (S2), connectée directement à la deuxième station (S2) via une connexion de charge (VL), **caractérisé par** :
- une première connexion partielle (VT1) de la connexion de charge (VL) pour la transmission d'au moins un identifiant (ID), l'identifiant (ID) identifiant la première station (S1) et la deuxième station (S2) en tant que partenaires de communication de la communication ;
- une connexion de communication (VK) pour effectuer la communication entre la première station (S1) et la deuxième station (S2), la communication pouvant être lancée après la réception de l'identifiant (ID) par la première station (S1) ou par la deuxième station (S2) avec utilisation de l'identifiant (ID) ; et
- la première connexion partielle (VT1) et la connexion de communication (VK) étant des liaisons physiques différentes ; et
- l'identifiant (ID) étant constitué sous la forme d'une adresse (ADR) de la première station (S1) et/ou de la deuxième station (S2).

12. Système de transmission (SYS) selon la revendication 11, dans lequel le système de transmission (SYS) comprend au moins un premier moyen (M1) qui est conçu pour exécuter un procédé présentant les caractéristiques d'une des revendications 2 à 10.

13. Première station (S1) pour établir une communication entre la première station (S1) et une deuxième station (S2), la première station (S1) étant, pour charger ou décharger une unité de mémoire (BAT) de la deuxième station (S2), connectée directement à la deuxième station (S2) via une connexion de charge (VL), **caractérisée par** :
- un deuxième moyen (M2) pour transmettre l'au moins un identifiant (ID) via une première connexion partielle (VT1) de la connexion de charge (VL), l'identifiant (ID) identifiant la première station (S1) et la deuxième station (S2) en tant que partenaires de communication de la communication, et pour effectuer la communication entre la première station (S1) et la deuxième station (S2) via une connexion de communication (VK), la communication pouvant être lancée après la réception de l'identifiant (ID) par la première station (S1) ou par la deuxième station (S2) avec utilisation de l'identifiant (ID), et la première connexion partielle (VT1) et la connexion de communication (VK) étant des connexions physiques différentes ; et
- l'identifiant (ID) étant constitué sous la forme d'une adresse (ADR) de la première station (S1) et/ou de la deuxième station (S2).

14. Première station selon la revendication 13, dans laquelle la première station (S1) comprend au moins un troisième moyen (M3) qui est conçu pour réaliser un procédé présentant les caractéristiques d'une des revendications 2 à 11.

15. Deuxième station (S2) pour établir une communication entre une première station (S1) et la deuxième station (S2), la première station (S1) étant, pour charger ou décharger une unité de mémoire (BAT) de la deuxième station (S2), connectée directement à la deuxième station (S2) via une connexion de charge (VL), **caractérisée par** :
- un quatrième moyen (M4) pour transmettre au moins un identifiant (ID) via une première connexion partielle (VT1) de la connexion de charge (VL), l'identifiant (ID) identifiant la première station (S1) et la deuxième station (S2) en tant que partenaires de communication de la communication, et pour effectuer la communication entre la première station (S1) et la deuxième station (S2) via une connexion de communication (VK), la communication pouvant être lancée après la réception de l'identifiant (ID) par la première station (S1) ou par la deuxième station (S2) avec utilisation de l'identifiant (ID), et la première connexion partielle (VT1) et la connexion de communication (VK) étant des connexions physiques différentes ; et
- l'identifiant (ID) étant constitué sous la forme d'une adresse (ADR) de la première station (S1) et/ou de la deuxième station (S2).

16. Deuxième station (S2) selon la revendication 15, dans laquelle la première station (S1) comprend au moins un cinquième moyen (M5) qui est conçu pour exécuter un procédé présentant les caractéristiques d'une des revendications 2 à 10.
